# EUROPEAN PATENT APPLICATION

(11) **EP 2 873 763 A1**
(43) Date of publication of application: **20.05.2015**
(21) Application number: 13817423.0
(22) Date of filing: 12.07.2013
(51) Int. Cl.: D06C 21/00, A47C 27/12, D04H 3/16

(54) **COMPRESSIBLE FRAMEWORK-LIKE STRUCTURE, COMPRESSIBLE/RESTORABLE FRAMEWORK-LIKE STRUCTURE, METHOD FOR COMPRESSING FRAMEWORK-LIKE STRUCTURE, AND METHOD FOR COMPRESSING AND RESTORING FRAMEWORK-LIKE STRUCTURE**

(30) Priority: 13.07.2012 JP 2012158094
(71) Applicant: C-Eng Co., Ltd., Gamagori-shi, Aichi 443-0057 (JP)
(72) Inventor: TAKAOKA, Nobuyuki, Gamagori-shi Aichi 443-0057 (JP)
(74) Representative: Smith, Matthew
(86) International application number: PCT/JP2013/004322
(87) International publication number: WO 2014/010257

(57) **Abstract**

Framework-like structures suffer from a problem in that transport costs are increased because bulk density is low. A mattress (1) composed of a framework-like structure is placed in a bag (2) for compression, a zipper of the bag (2) for compression is closed, a suction port of a suction device such as a vacuum cleaner is brought into contact with a non-return valve and air is suctioned out to thereby place and seal the mattress, which is in a compressed state, in a vacuum state and compress the thickness of the mattress (1). An airtight state at 65°C is subsequently maintained inside a container during transport. After transport, the zipper of the bag (2) for compression is opened, and the mattress (1) having been extracted from the bag (2) for compression is placed in a hot-air tank and restored in an atmosphere of 85°C.

## Description

### Technical Field

The present invention relates to compression and restoration of a three-dimensional netted structure.

### Background Art

One example of conventional method of forming a three-dimensional netted structure is described in Patent Literature 1. This method of forming the three-dimensional netted structure has the following characteristics. Melted filaments made of a thermoplastic resin as the raw material or the main material are extruded downward from a die having a nozzle with a plurality of holes at an end to freely fall between partly submerged haul-off machines. The three-dimensional netted structure is manufactured by hauling of the filaments at a lower velocity than the fall velocity. Two pairs of haul-off machines are provided such that each pair of haul-off machines are arranged to face each other. A rectangle is formed in directions perpendicular to the extruding direction by the above two pairs of haul-off machines. The interval between the facing haul-off machines is set to be less than the width of the mass of the extruded filaments. The three-dimensional netted structure is formed by bringing all the four sides of the outer periphery of the mass of filaments into contact with the haul-off machines before and after submerge of the haul-off machines. The surfaces of the outer periphery parallel to the extruding direction have the relatively higher density than the density of the residual part other than the surfaces. This enhances the degree of alignment without requiring post treatment.

### Citation List

### Patent Literature

Patent Literature 1: JP 2001-328153A

### SUMMARY

### Technical Problem

Long-distance transportation including overseas transportation of products using the three-dimensional netted structure, however, has the problem of high transportation cost, since the three-dimensional netted structure has high bulk density and is bulky.

The invention aims to reduce the transportation cost of the three-dimensional netted structure.

### Solution to Problem

According to one aspect of the invention, there is provided a compressed three-dimensional netted structure, comprising a three-dimensional netted structure formed by tangling filaments made of a thermoplastic resin at random and thermally welding tangles, wherein the filament has a diameter of 0.1 to 3.0 mm, and the three-dimensional netted structure has a bulk density of 0.01 g/cm³ to 0.10 g/cm³, the three-dimensional netted structure is sealed in a vacuum bag which is evacuated, so as to be compressed to thickness of 30 to 90% of original thickness, and the three-dimensional netted structure is kept in vacuum at -20 to 90°C.

According to another aspect of the invention, there is provided a compressed and restored three-dimensional netted structure obtained by opening the vacuum bag to make the compressed three-dimensional netted structure exposed to outside air and restoring thickness of the compressed three-dimensional netted structure in an atmosphere of 30 to 220°C.

According to another aspect of the invention, there is provided a compressed three-dimensional netted structure, comprising a three-dimensional netted structure formed by tangling filaments made of a thermoplastic resin at random and thermally welding tangles, wherein the filament has a diameter of 0.1 to 3.0 mm, and the three-dimensional netted structure has a bulk density of 0.01 g/cm³ to 0.10 g/cm³, the three-dimensional netted structure is placed between a pair of compression plates in a thickness direction of the three-dimensional netted structure and is bound with a binder, so as to be compressed to thickness of 30 to 90% of original thickness, and the three-dimensional netted structure is kept bound at -20 to 90°C.

According to yet another aspect of the invention, there is provided a compressed and restored three-dimensional netted structure obtained by removing the binder to unbind the compressed three-dimensional netted structure and restoring thickness of the compressed three-dimensional netted structure in an atmosphere of 30 to 220°C.

According to yet another aspect of the invention, there is provided a compressed three-dimensional netted structure, comprising a three-dimensional netted structure formed by tangling filaments made of a thermoplastic resin at random and thermally welding tangles, wherein the filament has a diameter of 0.1 to 3.0 mm, and the three-dimensional netted structure has a bulk density of 0.01 g/cm³ to 0.10 g/cm³, the three-dimensional netted structure is sealed in a vacuum bag which is evacuated, while being placed between a pair of compression plates in a thickness direction of the three-dimensional netted structure and being bound with a binder, so as to be compressed to thickness of 30 to 90% of original thickness, and the three-dimensional netted structure is kept in vacuum and bound at -20 to 90°C.

According to yet another aspect of the invention, there is provided a compressed and restored three-dimensional netted structure obtained by removing the binder to unbind the compressed three-dimensional netted structure, opening the vacuum bag to make the compressed three-dimensional netted structure exposed to outside air and restoring thickness of the compressed three-dimensional netted structure in an atmosphere of 30 to 220°C.

According to one preferable embodiment of the invention, the three-dimensional netted structure is exposed to an atmosphere of 40 to 200°C or to hot water and temperature is then decreased to room temperature, before the three-dimensional netted structure is compressed to the thickness of 30 to 90% of the original thickness.

According to another preferable embodiment of the invention, the compressed three-dimensional netted structure or the compressed and restored three-dimensional netted structure has an outer peripheral part covered with an outer layer having air permeability.

According to another aspect of the invention, there is provided a compression method of a three-dimensional netted structure, including: a compressing step of sealing a three-dimensional netted structure formed by tangling filaments, which are made of a thermoplastic resin and have a diameter of 0.1 to 3.0 mm, at random and thermally welding tangles to have a bulk density of 0.01 g/cm³ to 0.10 g/cm³, in a vacuum bag which is evacuated, so as to compress the three-dimensional netted structure to thickness of 30 to 90% of original thickness, and a retaining step of keeping the three-dimensional netted structure in vacuum at -20 to 90°C.

According to one preferable embodiment of the invention, a compression and restoration method of the three-dimensional netted structure may include, after the compressing step and the retaining step of the compression method of the three-dimensional netted structure, a restoring step of opening the vacuum bag to make the three-dimensional netted structure exposed to outside air and restoring thickness of the compressed three-dimensional netted structure in an atmosphere of 30 to 220°C.

According to another aspect of the invention, there is provided a compression method of a three-dimensional netted structure, including: a compressing step of placing a three-dimensional netted structure formed by tangling filaments, which are made of a thermoplastic resin and have a diameter of 0.1 to 3.0 mm, at random and thermally welding tangles to have a bulk density of 0.01 g/cm³ to 0.10 g/cm³, between a pair of compression plates in a thickness direction of the three-dimensional netted structure and binding the three-dimensional netted structure with a binder, so as to compress the three-dimensional netted structure to thickness of 30 to 90% of original thickness, and a retaining step of keeping the three-dimensional netted structure bound at -20 to 90°C.

According to one preferable embodiment of the invention, a compression and restoration method of the three-dimensional netted structure may include, after the compressing step and the retaining step of the compression method of the three-dimensional netted structure, a restoring step of removing the binder to unbind the compressed three-dimensional netted structure and restoring thickness of the compressed three-dimensional netted structure in an atmosphere of 30 to 220°C.

According to another aspect of invention, there is provided a compression method of a three-dimensional netted structure, including: a compressing step of sealing a three-dimensional netted structure formed by tangling filaments, which are made of a thermoplastic resin and have a diameter of 0.1 to 3.0 mm, at random and thermally welding tangles to have a bulk density of 0.01 g/cm³ to 0.10 g/cm³, in a vacuum bag which is evacuated, while placing the three-dimensional netted structure between a pair of compression plates in a thickness direction of the three-dimensional netted structure and binding the three-dimensional netted structure with a binder, so as to compress the three-dimensional netted structure to thickness of 30 to 90% of original thickness, and a retaining step of keeping the three-dimensional netted structure in vacuum at -20 to 90°C.

According to one preferable embodiment of the invention, a compression and restoration method of the three-dimensional netted structure may include, after the compressing step and the retaining step of the compression method of the three-dimensional netted structure, a restoring step of opening the vacuum bag to make the three-dimensional netted structure exposed to outside air, removing the binder to unbind the compressed three-dimensional netted structure and restoring thickness of the compressed three-dimensional netted structure in an atmosphere of 30 to 220°C.

According to another preferable embodiment of the invention, the compression and restoration method of the three-dimensional netted structure may further include: a pretreatment step of exposing the three-dimensional netted structure to an atmosphere of 40 to 200°C or to hot water and subsequently decreasing temperature to room temperature, before the compressing step.

According to yet another preferable embodiment of the invention, the three-dimensional netted structure is a three-dimensional netted structure having an outer peripheral part covered with an outer layer having air permeability.

The term "in vacuum" described above indicates the internal state of the vacuum bag under reduced pressure lower than the atmospheric pressure and is preferably 70 to 550 mmHg (93.3 to 733.3 hPa).

The term "restoration" described above means recovery of the thickness of the compressed three-dimensional netted structure and is not limited to complete restoration of the thickness to the original level prior to compression. Heating during restoration may be performed after the three-dimensional netted structure is taken out from the vacuum bag or may be performed to expose the three-dimensional netted structure placed inside of the vacuum bag to a predetermined atmosphere temperature.

### Advantageous Effects

The configuration of the invention significantly reduces the bulk of the mattress of three-dimensional netted structure and thus remarkably reduces the transportation cost in export to overseas and domestic long-distance transportation. Additionally, investment can be concentrated on only one factory for manufacturing the three-dimensional netted structure, and factories for restoring the three-dimensional netted structure may be established in various places. This significantly facilitates domestic and overseas expansion. Furthermore, this configuration reduces the initial settling of the three-dimensional netted structure in factories originally employing the technique of crushing the three-dimensional netted structure with a roller.

### BRIEF DESCRIPTION OF DRAWINGS

Fig. 1 is a perspective view illustrating a mattress of three-dimensional netted structure 1 according to Embodiment 1 of the invention;
Fig. 2 is a perspective view illustrating the mattress of three-dimensional netted structure 1 in a compressed state;
Fig. 3 is diagrams illustrating the mattress of three-dimensional netted structure 1 of the embodiment having harder side surface portions 5 and a center portion 7; Fig. 3(a) is a perspective view and Fig. 3(b) is a front view;
Fig. 4 is a perspective view illustrating a three-dimensional netted structure according to Embodiment 2 of the invention in a compressed state;
Fig. 5 is a perspective view illustrating a three-dimensional netted structure according to Embodiment 3 of the invention in a state before compression; and
Fig. 6 is a perspective view illustrating the three-dimensional netted structure of Embodiment 3 in a state after compression.

### DESCRIPTION OF EMBODIMENTS

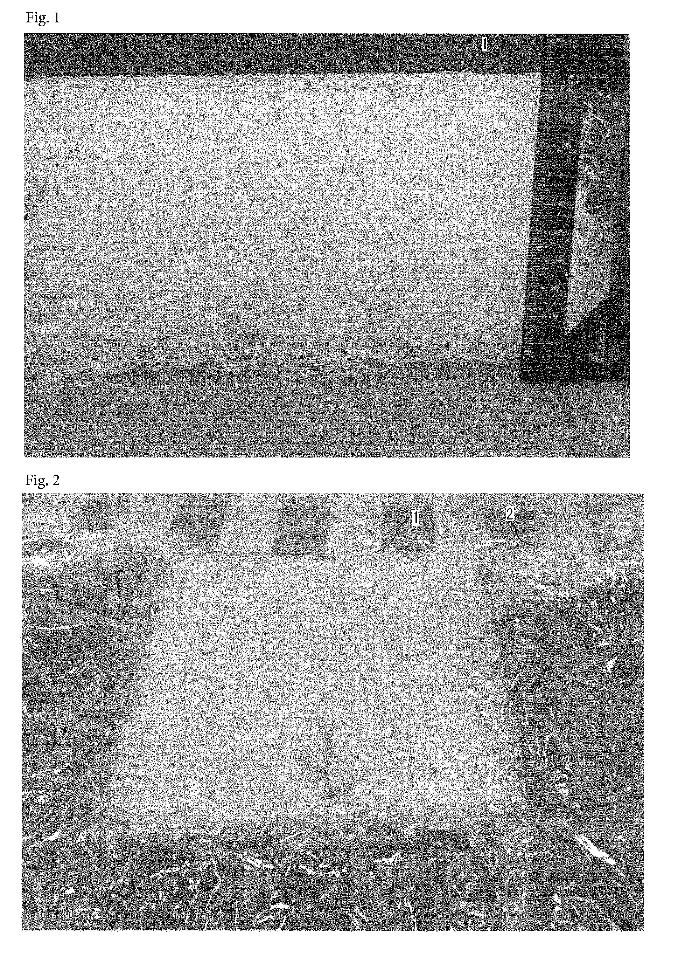

A mattress of three-dimensional netted structure 1 (hereinafter simply referred to as mattress 1) of Embodiment 1 of the invention is compressed and restored by the method of the invention. The following describes compression and restoration of the mattress 1 with its advantageous effects with reference to Figs. 1 and 2.

The mattress 1 is formed by tangling filaments made of a thermoplastic resin at random and thermally welding tangles and is compressible and restorable under predetermined conditions (see Fig. 1). The mattress 1 has a thickness of 105 mm, a bulk density of 0.06 g/cm³ and a filament diameter of 0.7 mm. The width and the length are set appropriately. The material is polyethylene (PE). The mattress 1 may be used, for example, for beds, sofas and chairs. These are, however, not restrictive, and the mattress 1 may be applied for other purposes.

Compression of the mattress 1 is described as below. As shown in Fig. 2, the mattress 1 is placed in a vacuum bag 2, and the vacuum bag 2 is evacuated by suction of the air via a check valve (not shown) which a suction port of a suction device such as a vacuum cleaner is brought into contact with. The mattress 1 is accordingly sealed in the compressed state to have the thickness of 38 mm (36%) in the vacuum bag 2. The compression rate is preferably about 30 to 90%. Controlling the atmosphere temperature to 30 to 180°C during compression enhances the compression rate.

The compressed mattress 1 is kept in the airtight state of the vacuum bag 2 at -20 to 90°C to be stored and transported. The upper limit temperature in this state is more preferably not higher than 80°C and is furthermore preferably not higher than 70°C. The compressed mattress 1 can thus be stored in the state that the three-dimensional netted structure of the mattress 1 is restorable. This allows for long-distance transportation of the mattress 1 in the compressed state and thereby reduces the transportation cost.

The mattress 1 is in the compressed state in a container in the course of transportation and is restorable at any desired location after transportation. More specifically, the vacuum bag 2 is opened, and the mattress 1 taken out of the vacuum bag 2 is placed in a hot air tank (not shown) to be restored in the atmosphere of 85°C. According to this embodiment, the restored mattress 1 has the height of 97.5 mm, and the restoration rate is 92.8%. This is only illustrative. The temperature for restoring the mattress 1 is preferably 30 to 220°C and is more preferably 50 to 220°C. This example is related to an olefin resin. The temperature condition depends on the properties of the raw material, and another material may be used. For example, a polyester elastomer, instead of polyethylene, may be used as the raw material of the three-dimensional netted structure. In the application using polyethylene as the raw material, the restoration condition is preferably the atmosphere of 50 to 100°C. In the application using polyester elastomer as the raw material, the restoration condition is preferably the atmosphere of 80 to 150°C. In other applications, restoration from the compressed state may be performed at ordinary temperature or may be performed using a hot water tank, instead of the hot air tank.

The manufacturing method of the mattress 1 is known in the art and is not specifically described here in detail. Please refer to Japanese Patent 4350286 and US Patent No. 7.625,629.

The filament diameter of the mattress 1 is preferably 0.2 to 2.0 mmφ, is more preferably 0.3 to 1.5 mmφ and is especially preferably 0.5 to 0.9 mmφ. The overall average bulk density of the mattress 1 is preferably in the range of 0.030 g/cm³ to 0.100 g/cm³, is more preferably in the range of 0.034 g/cm³ to 0.080 g/cm³ and is especially preferably in the range of 0.045 g/cm³ to 0.075 g/cm³. The filaments constituting the mattress 1 may have a hollow cross section or may have cross sections in different shapes.

The mattress 1 may be formed to have a partially increased bulk density, for example, like harder side surface portions described later. The mattress 1 of the varying density structure is similarly compressible and restorable as described above. In this application, the bulk density differs in different portions. It is, however, preferable that even a low bulk density portion has the bulk density of not lower than about 0.020 g/cm³. The bulk density of lower than 0.015 g/cm³ is likely to cause a failure in tangling and joining the extruded filaments. It is also preferable that even a high bulk density portion has the bulk density of not higher than about 0.087 g/cm³. The bulk density of higher than 0.087 g/cm3 generates the repulsive force of greater than 19.6 kPa, which is unsuitable for the mattress. The filament diameter as well as the upper limit and the lower limit of the bulk density described above are only some indications and may partly be deviated from these values according to the embodiment and may also be deviated from these values in some applications.

The measurement method of the repulsive force is described as below. The measurement method applies a load on the center of the mattress 1 via a circular disk of 150 mmφ and measures the applied force to give a depression of 10 mm to the mattress as the repulsive force. The measurement instrument used is digital force gauge ZPS and load cell ZPS-DPU-1000N manufactured by IMADA CO., LTD.

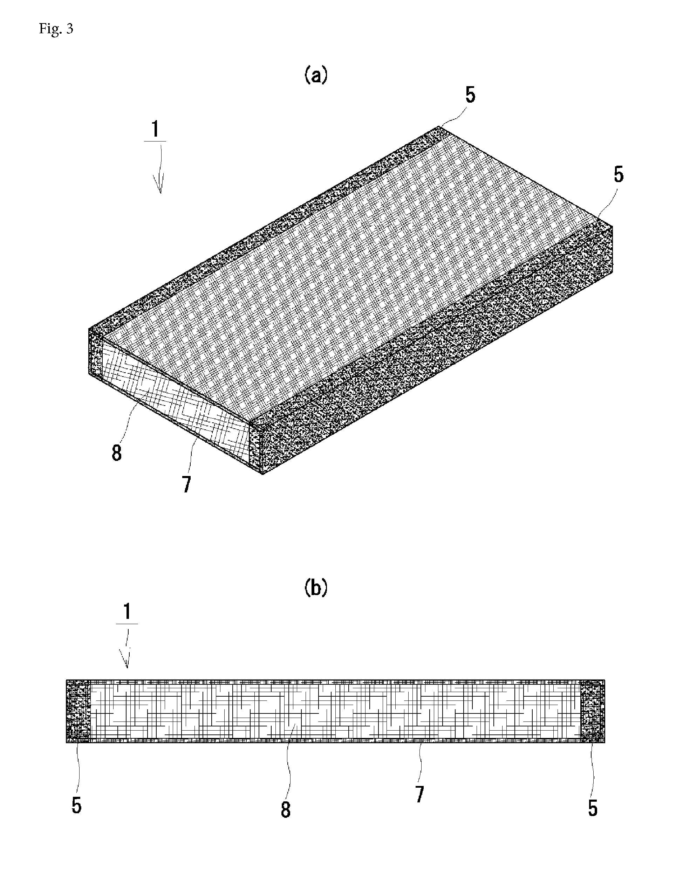

The mattress 1 may be formed to have harder side surface portions 5 of the higher bulk density on both sides thereof as shown in Figs. 3(a) and 3(b). This structure reduces settling of the mattress 1. The filament diameter and the bulk density are not limited to the above values to give the harder side surface portions 5. The harder side surface portions 5 may be made from the filaments of the larger filament diameter or the filaments having an increased cross section of elliptical shape. The filaments may be solid or may be hollow.

The bulk density of the harder side surface portions 5 of the mattress 1 is preferably 0.040 g/cm³ to 0.300 g/cm³, is more preferably 0.050 g/cm³ to 0.200 g/cm³ and is especially preferably 0.060 g/cm³ to 0.100 g/cm³.

The bulk density of a center portion 6 other than the harder side surface portions is preferably 0.020 g/cm³ to 0.110 g/cm³, is more preferably 0.040 g/cm³ to 0.095 g/cm³ and is specially preferably 0.045 g/cm³ to 0.085 g/cm³.

The ratio of the bulk density of the harder side surface portions 5 to the center portion 6 other than the harder side surface portions, i.e., bulk density of harder side surface portions 5 : bulk density of center portion 6, is preferably about 1.2 : 1 to about 3 : 1.

With regard to the harder side surface portions 5, the range in which the bulk density is increased and the ends are hardened is preferably the range of 20 mm to 150 mm from the ends in the width direction, is more preferably the range of 50 mm to 120 mm and is especially preferably 60 mm to 100 mm.

As shown in Figs. 3(a) and 3(b), the mattress 1 may be formed to have an outer peripheral surface portion 7 having the higher bulk density than those of the other portions. The surface portion 7 is formed like a thin film and has difficulty in measuring the bulk density. On the assumption that the average value to a depth where the higher bulk density than that of an inner layer portion 8 is distributed is specified as the bulk density of the harder surface portion, the bulk density of the harder surface portion 7 : bulk density of the inner layer portion 8 is about 1.2 : 1 to about 6 : 1.

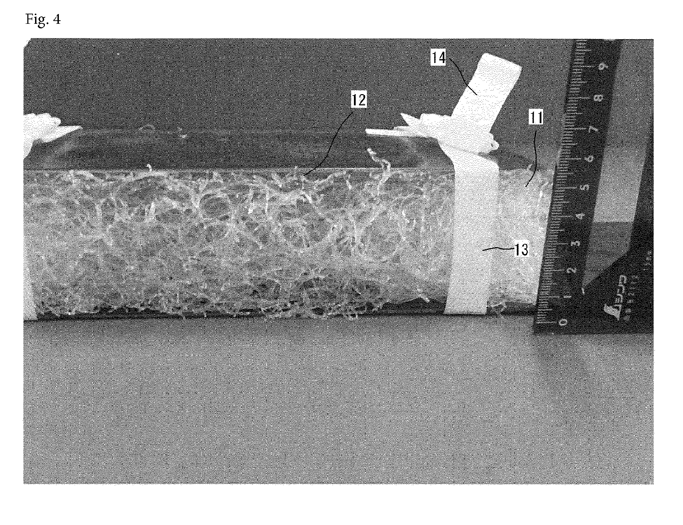

The following describes a mattress 11 according to Embodiment 2 with reference to Fig. 4. The mattress 1 has the similar physical properties to that of Embodiment 1. A pair of compression plates 12, binders 13 and fasteners 14 are used, in place of the vacuum bag 2. The pair of compression plates 12 are placed to respectively come into contact with the upper surface and the lower surface of the mattress 11, and the mattress 11 is bound by the binders 13, which are fastened by the fasteners 14, so as to be compressed. The mattress 11 is compressed to have the thickness of 55 mm (52.4%). In the application using polyethylene as the raw material, the mattress 11 is kept in the airtight state at the atmosphere temperature of not higher than 80°C, for example, at the atmosphere temperature of 65°C, in a container during transportation. After transportation, the fasteners 14 are released, the compression plates 12 and the binders 13 are removed, and the mattress 11 is placed in a hot air tank (not shown) to be restored in the atmosphere of 85°C. The restored mattress 11 of three-dimensional netted structure has the height of 103 mm. The restoration rate is 98.1%.

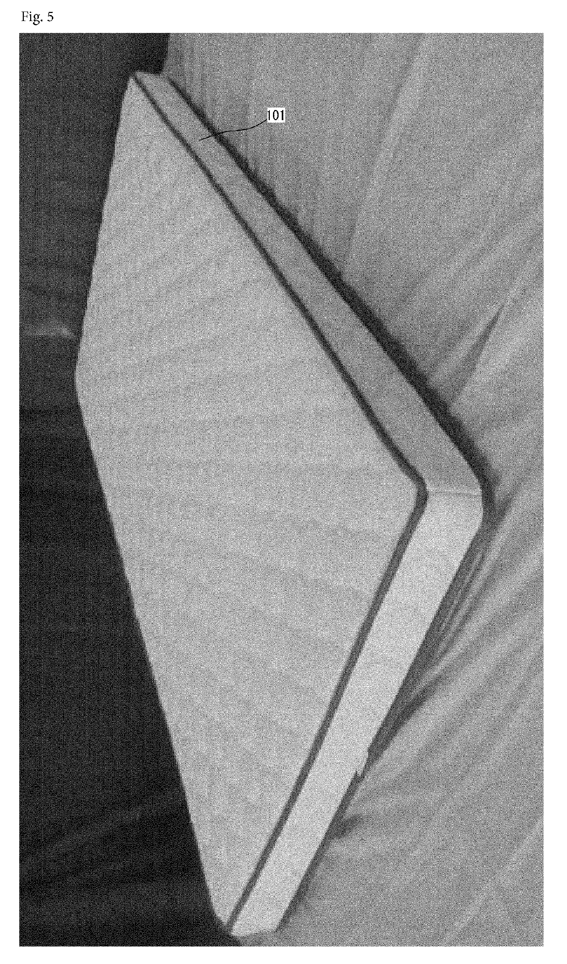

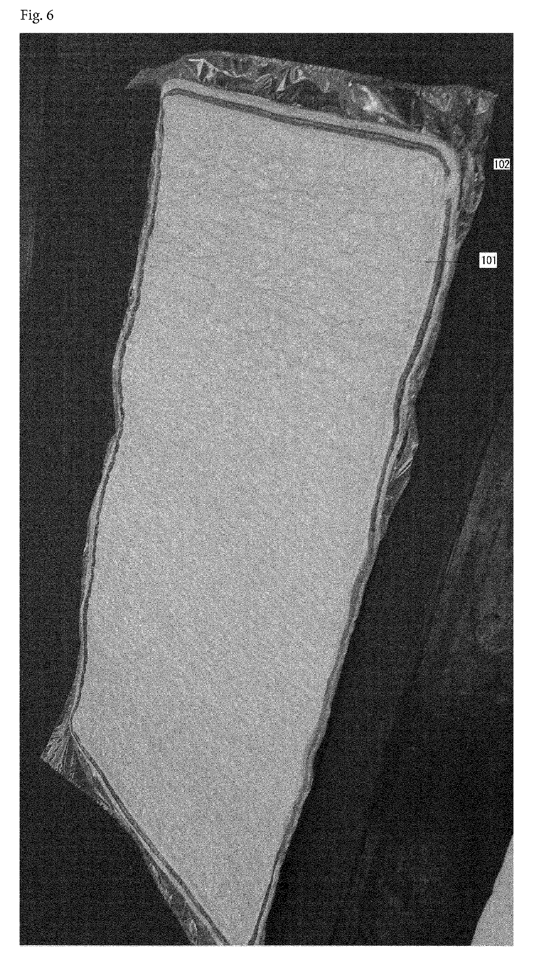

The following describes a mattress 101 according to Embodiment 3 with reference to Figs. 5 and 6. This mattress 101 has an outer peripheral portion covered with an outer layer of, for example, cloth having air permeability. Otherwise the mattress 101 is similar to the mattress of Embodiment 1, and its description is applied to this mattress 101. Although the compression rate and the restoration rate are slightly different, the mattress 101 has similar advantageous effects. Providing the outer layer slightly decreases the compression rate.

The following describes a mattress 201 according to Embodiment 4. Embodiment 4 uses the vacuum bag 2 of Embodiment 1 in combination with the pair of compression plates 12, the binders 13 and the fasteners 14 of Embodiment 2. In the following description, the respective components corresponding to those of Embodiment 1 or Embodiment 2 are expressed by the like numerals in 200s. The procedure of Embodiment 4 evacuates a vacuum bag 202 to seal the mattress 201 in the vacuum bag 202, places the mattress 201 between a pair of compression plates 212 in the thickness direction and binds the mattress 201 with binders 213. The mattress 201 is accordingly compressed to the thickness of about 30 to 90% of the original thickness. This provides the mattress 201 of three-dimensional netted structure kept in vacuum and bound at -20 to 90°C. The mattress 201 is unbound by removal of the binders and is exposed to the outside air by opening the vacuum bag, so that the thickness of the mattress 201 is restored in the atmosphere of 30 to 220°C.

The mattress 201 of Embodiment 4 is actively evacuated with a check valve (not shown) provided in the vacuum bag 202 to release the internal air in a non-returnable manner like Embodiment 1 and is additionally placed and pressed between the pair of compression plates 212. This results in further evacuating the vacuum bag 202. The compression plates 212 may be placed inside or outside of the vacuum bag 202. Otherwise the mattress 201 has the similar physical properties to those of Embodiment 1 or Embodiment 2.

The following describes a mattress 301 according to Embodiment 5. The procedure of Embodiment 5 performs pretreatment of exposing the mattress 301 to an atmosphere of 40 to 200°C or to hot water and subsequently decreasing the temperature to room temperature, before compressing the mattress 301 to the thickness of about 30 to 90% of the original thickness. This procedure is applicable to any of Embodiments 1 to 4 described above. In the application using polyethylene as the raw material, the temperature of the pretreatment is preferably 40 to 90°C. In the application using polyester as the raw material, the temperature of the pretreatment is preferably 40 to 200°C.

A measurement test for evaluating the advantageous effects of Embodiment 5 is described with reference to Tables 1 and 2. This measurement test was performed in conformity with JIS K 6400-4, Method A for the purpose of comparison of the compressive residual strains between samples subject to the pretreatment of Embodiment 5 shown in Table 1 and samples without pretreatment shown in Table 2. More specifically, the measurement test for each of the samples shown in Tables 1 and 2 used a single test piece of 50 mm by 50 mm square of three-dimensional netted structure made of polyethylene as the raw material or a stack of two test pieces as the sample, compressed the sample at temperature of 70±1°C to the thickness of 50% of the original thickness, kept the sample in the compressed state at the temperature for 22 hours, released the sample from the compressed state, left the sample at the temperature of 23°C and the humidity of 50% for 24 hours, and measured the thickness of the sample. The difference between the thickness before the compression and the thickness after the compression was specified as the compressive residual strain.

The four samples shown in Table 1 were subjected to pretreatment of soaking in hot water of 80°C for 5 minutes and then decreasing the temperature to room temperature. The four samples shown in Table 2 were without this pretreatment. With respect to CHA, CHW, DHA and DHW of the four samples shown in Table 1, HA represents pretreatment with hot air, i.e., in an atmosphere of 80°C; HW represents pretreatment with hot water, i.e., in hot water of 80°C; and C and D represent different three-dimensional netted structures having different bulk densities as the sample. In Table 2, A, B and C similarly represent different three-dimensional netted structures having different bulk densities as the samples.

The values of compressive residual strain in Tables 1 and 2 show amounts of strain that is not restored after compression. The smaller value indicates the higher restoration rate. According to comparison between the values of compressive residual strain in Tables 1 and 2, all the samples of Table 1 subjected to the pretreatment have significantly higher restoration rates than those of the samples of Table 2 without the pretreatment, regardless of the differences in conditions, such as the bulk density and stacking of sample pieces. This measurement test was performed in conformity with the measurement method and procedure specified in JIS K 6400-4, Method A. Heating during restoration as described above in Embodiments 1 to 4 further enhances the restoration rate.

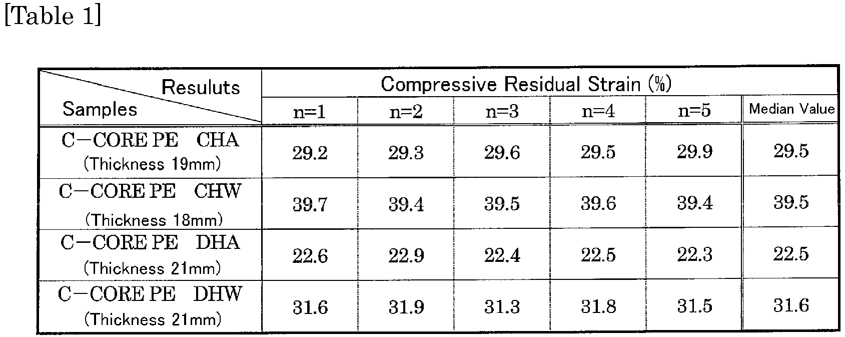

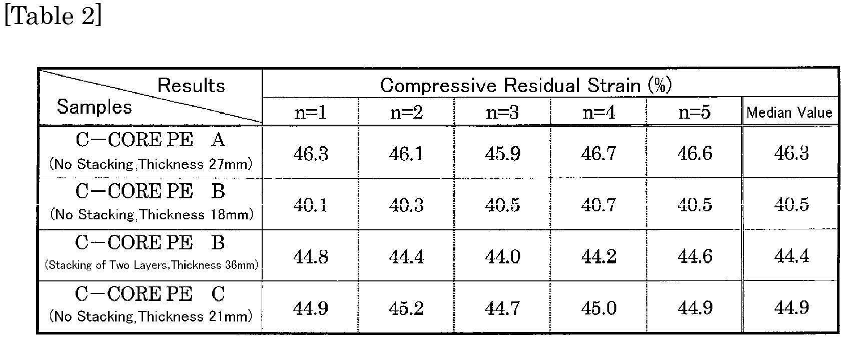

The invention is not limited to the above embodiments but various modifications may be made to the embodiments without departing from the scope of the invention. Such modifications as well as their equivalents are also included in the scope of the invention.

## Claims

1. A compressed three-dimensional netted structure, comprising a three-dimensional netted structure formed by tangling filaments made of a thermoplastic resin at random and thermally welding tangles, wherein
the filament has a diameter of 0.1 to 3.0 mm, and the three-dimensional netted structure has a bulk density of 0.01 g/cm³ to 0.10 g/cm³,
the three-dimensional netted structure is sealed in a vacuum bag which is evacuated, so as to be compressed to thickness of 30 to 90% of original thickness, and
the three-dimensional netted structure is kept in vacuum at -20 to 90°C.

2. A compressed and restored three-dimensional netted structure obtained by opening the vacuum bag to make the compressed three-dimensional netted structure according to claim 1 exposed to outside air and restoring thickness of the compressed three-dimensional netted structure in an atmosphere of 30 to 220°C.

3. A compressed three-dimensional netted structure, comprising a three-dimensional netted structure formed by tangling filaments made of a thermoplastic resin at random and thermally welding tangles, wherein
the filament has a diameter of 0.1 to 3.0 mm, and the three-dimensional netted structure has a bulk density of 0.01 g/cm³ to 0.10 g/cm³,
the three-dimensional netted structure is placed between a pair of compression plates in a thickness direction of the three-dimensional netted structure and is bound with a binder, so as to be compressed to thickness of 30 to 90% of original thickness, and
the three-dimensional netted structure is kept bound at -20 to 90°C.

4. A compressed and restored three-dimensional netted structure obtained by removing the binder to unbind the compressed three-dimensional netted structure according to claim 3 and restoring thickness of the compressed three-dimensional netted structure in an atmosphere of 30 to 220°C.

5. A compressed three-dimensional netted structure, comprising a three-dimensional netted structure formed by tangling filaments made of a thermoplastic resin at random and thermally welding tangles, wherein
the filament has a diameter of 0.1 to 3.0 mm, and the three-dimensional netted structure has a bulk density of 0.01 g/cm³ to 0.10 g/cm³,
the three-dimensional netted structure is sealed in a vacuum bag which is evacuated, while being placed between a pair of compression plates in a thickness direction of the three-dimensional netted structure and being bound with a binder, so as to be compressed to thickness of 30 to 90% of original thickness, and
the three-dimensional netted structure is kept in vacuum and bound at -20 to 90°C.

6. A compressed and restored three-dimensional netted structure obtained by removing the binder to unbind the compressed three-dimensional netted structure according to claim 5, opening the vacuum bag to make the compressed three-dimensional netted structure exposed to outside air and restoring thickness of the compressed three-dimensional netted structure in an atmosphere of 30 to 220°C.

7. The compressed three-dimensional netted structure or the compressed and restored three-dimensional netted structure according to any one of claims 1 to 6,
wherein the three-dimensional netted structure is exposed to an atmosphere of 40 to 200°C or to hot water and temperature is then decreased to room temperature, before the three-dimensional netted structure is compressed to the thickness of 30 to 90% of the original thickness.

8. The compressed three-dimensional netted structure or the compressed and restored three-dimensional netted structure according to any one of claims 1 to 7,
wherein the compressed three-dimensional netted structure or the compressed and restored three-dimensional netted structure has an outer peripheral part covered with an outer layer having air permeability.

9. A compression method of a three-dimensional netted structure, comprising:
a compressing step of sealing a three-dimensional netted structure formed by tangling filaments, which are made of a thermoplastic resin and have a diameter of 0.1 to 3.0 mm, at random and thermally welding tangles to have a bulk density of 0.01 g/cm³ to 0.10 g/cm³, in a vacuum bag which is evacuated, so as to compress the three-dimensional netted structure to thickness of 30 to 90% of original thickness, and
a retaining step of keeping the three-dimensional netted structure in vacuum at -20 to 90°C.

10. A compression and restoration method of the three-dimensional netted structure, comprising:
after the compressing step and the retaining step of the compression method of the three-dimensional netted structure according to claim 9,
a restoring step of opening the vacuum bag to make the three-dimensional netted structure exposed to outside air and restoring thickness of the compressed three-dimensional netted structure in an atmosphere of 30 to 220°C.

11. A compression method of a three-dimensional netted structure, comprising:
a compressing step of placing a three-dimensional netted structure formed by tangling filaments, which are made of a thermoplastic resin and have a diameter of 0.1 to 3.0 mm, at random and thermally welding tangles to have a bulk density of 0.01 g/cm³ to 0.10 g/cm³, between a pair of compression plates in a thickness direction of the three-dimensional netted structure and binding the three-dimensional netted structure with a binder, so as to compress the three-dimensional netted structure to thickness of 30 to 90% of original thickness, and
a retaining step of keeping the three-dimensional netted structure bound at -20 to 90°C.

12. A compression and restoration method of the three-dimensional netted structure, comprising:
after the compressing step and the retaining step of the compression method of the three-dimensional netted structure according to claim 11,
a restoring step of removing the binder to unbind the compressed three-dimensional netted structure and restoring thickness of the compressed three-dimensional netted structure in an atmosphere of 30 to 220°C.

13. A compression method of a three-dimensional netted structure, comprising:
a compressing step of sealing a three-dimensional netted structure formed by tangling filaments, which are made of a thermoplastic resin and have a diameter of 0.1 to 3.0 mm, at random and thermally welding tangles to have a bulk density of 0.01 g/cm³ to 0.10 g/cm³, in a vacuum bag which is evacuated, while placing the three-dimensional netted structure between a pair of compression plates in a thickness direction of the three-dimensional netted structure and binding the three-dimensional netted structure with a binder, so as to compress the three-dimensional netted structure to thickness of 30 to 90% of original thickness, and
a retaining step of keeping the three-dimensional netted structure in vacuum at -20 to 90°C.

14. A compression and restoration method of the three-dimensional netted structure, comprising:
after the compressing step and the retaining step of the compression method of the three-dimensional netted structure according to claim 13,
a restoring step of opening the vacuum bag to make the three-dimensional netted structure exposed to outside air, removing the binder to unbind the compressed three-dimensional netted structure and restoring thickness of the compressed three-dimensional netted structure in an atmosphere of 30 to 220°C.

15. The compression and restoration method of the three-dimensional netted structure according to any one of claims 9 to 14, further comprising:
a pretreatment step of exposing the three-dimensional netted structure to an atmosphere of 40 to 200°C or to hot water and subsequently decreasing temperature to room temperature, before the compressing step.

16. The compression method of the three-dimensional netted structure or the compression and restoration method of the three-dimensional netted structure according to any one of claims 9 to 15,
wherein the three-dimensional netted structure is a three-dimensional netted structure having an outer peripheral part covered with an outer layer having air permeability.
